# EUROPEAN PATENT APPLICATION

(11) **EP 4 016 438 A1**
(43) Date of publication of application: **22.06.2022**
(21) Application number: 20934948.9
(22) Date of filing: 22.12.2020
(51) Int. Cl.: G06Q 50/34

(54) **INFORMATION PROCESSING DEVICE, INFORMATION PROCESSING METHOD, AND PROGRAM**

(30) Priority: 13.05.2020 JP 2020084629
(71) Applicant: Mixi, Inc., Tokyo 150-6136 (JP)
(72) Inventor: ISHII, Koji, Tokyo 150-6136 (JP); KURIYAMA, Kosuke, Tokyo 150-6136 (JP); MATSUMOTO, Masanori, Tokyo 150-6136 (JP); KOMAKI, Nobutaka, Tokyo 150-6136 (JP)
(74) Representative: Plougmann Vingtoft a/s
(86) International application number: PCT/JP2020/047924
(87) International publication number: WO 2021/229850

(57) **Abstract**

An information processing apparatus 10 includes: an accepting part 111 that accepts, from a bettor, a bet placed on a first competition based on betting contents of a tipster, who is different from the bettor, for the first competition, and an information notification part 112 that notifies the bettor of information on the second competition when a bet on a second competition different from the first competition is accepted from the tipster. The information notification part 112 notifies information on the second competition during a period in which a bet can be placed on the second competition. If the bettor has not bet on the second competition, the information notification part 112 notifies the bettor of the information on the second competition.

## Description

### TECHNICAL FIELD

The present invention relates to an information processing apparatus, an information processing method, and a program.

### BACKGROUND OF THE INVENTION

A system is known in which a bet (vote) can be placed from a portable device on various competitions, such as a bicycle race, a horse race, a motorboat race, or the like. Patent Document 1 discloses a system in which a user can place a reserved bet on a competition in which a player or a racehorse designated by the user will compete.

### PRIOR ART

### PATENT DOCUMENT

[Patent Document 1] Japanese Unexamined Patent Application Publication No. 2002-109119

### SUMMARY OF INVENTION

### PROBLEMS TO BE SOLVED BY THE INVENTION

In the system disclosed in Patent Document 1, there is a problem that the user needs to set a reservation condition in advance and so it takes time and effort. Further, when the user is a beginner bettor, there may be a case where his/her favorite players or racehorses have not been decided, or he/she has does not have much knowledge of the competition. For this reason, the user may miss an opportunity to place a bet because he/she does not know how to make a reservation.

An object of the present disclosure is to make it easier for a user to continue placing bets on competitions.

### MEANS FOR SOLVING THE PROBLEMS

An information processing apparatus according to an aspect of the present disclosure includes: an accepting part that accepts a bet on a first competition from a first user and a bet on the first competition from a second user; and an information notification part that notifies the first user of information on a second competition different from the first competition when the accepting part accepts a bet on the second competition from the second user after the first user has bet in the first competition on the same or at least partially the same betting target as a betting target bet on by the second user in the first competition.

### EFFECT OF THE INVENTION

According to the present disclosure, an effect that a user can easily continue placing bets on competitions can be achieved.

### BRIEF DESCRIPTION OF THE DRAWINGS

FIG. 1 shows an example of a system configuration of a betting system according to the present embodiment.
FIG. 2 shows an example of a hardware configuration of an information processing apparatus.
FIG. 3 shows an example of a hardware configuration of a terminal.
FIG. 4 shows a functional block configuration example of a processor.
FIG. 5 is a screen to be displayed on a terminal on which application software for betting is launched.
FIGS. 6Aand 6B are each an example of a screen to be displayed on the terminal when a bettor selects to place a bandwagon bet.
FIG. 7 is a screen for entering a wager amount of a bandwagon bet.
FIG. 8 shows an example of bandwagon betting history information.
FIG. 9 shows an example of a notification screen displayed on a terminal.
FIG. 10 is a flowchart showing processing of the information processing apparatus.

### DETAILED DESCRIPTION OF THE INVENTION

### <System configuration>

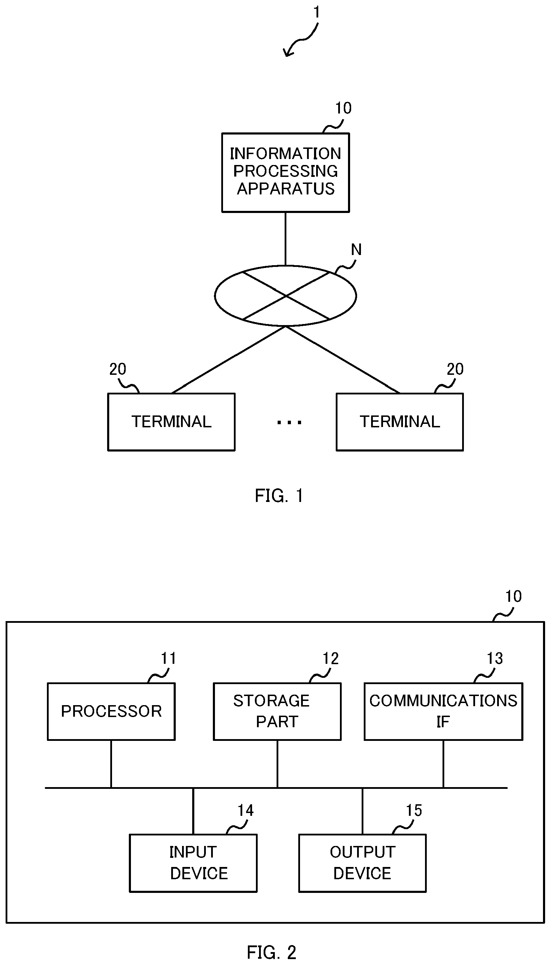

FIG. 1 shows an example of a system configuration of a betting system 1 according to the present embodiment. Abetting system 1 shown in FIG. 1 includes an information processing apparatus 10 and one or more terminals 20. The information processing apparatus 10 and the terminal 20 are connected to each other in a manner enabling communications via a communication network N such as the Internet, an intranet, a wireless LAN, or a mobile communication network.

The information processing apparatus 10 is an apparatus that accepts a bet for a competition in which a bet can be placed on a betting target. Specifically, the information processing apparatus 10 is an apparatus for supporting a bettor, who is a first user, who uses the terminal 20 to bet, in a competition such as a bicycle race, a horse race, or a motorboat race, a predetermined value on a contestant (including a player or an animal) who is expected to win the competition. The competition does not need to be a competition in which contestants move in a competition field, and it may be e-sports.

The bettor may place a bet by determining a betting target defined by a combination of (i) a betting type (i.e., wager type) and (ii) a plurality of contestants or starting gate numbers corresponding to the plurality of contestants expected to win a competition, and by setting (i) the determined betting target and (ii) a predetermined value of the number of bets or a wager amount for the betting target to the terminal 20. In a case where a bicycle race is the competition to be the object of betting, the betting target is "a perfecta, in which the contestant number 5 comes in first and the contestant number 2 comes in second," or "a trio, in which the contestant number 1, the contestant number 2, and the contestant number 5 are chosen," for example. Note that the perfecta is to predict two contestants who come in the first and second places in exact order, and the trio is to predict three contestants who come in the first, second and third places in any order.

The predetermined value may be (i) money or (ii) points or the like which are usable in predetermined services or games. Also, the points may be points that can be received by the bettor for free (free points), or points that can be received in exchange for payment of money (chargeable points).

The information processing apparatus 10 includes one or a plurality of physical servers. The information processing apparatus 10 may be configured using a virtual server operating on a hypervisor or may be configured using a cloud server, for example.

The terminal 20 is a terminal used by a bettor who places a bet, and is an information processing terminal such as a cell phone (including a smartphone), a tablet terminal, or a personal computer, for example. The bettor can bet on the betting target by operating the terminal 20. Upon accepting an input of the betting target from the bettor, the terminal 20 transmits information indicating the betting target to the information processing apparatus 10 in association with bettor identification information (hereinafter referred to as a "bettor ID") for identifying the bettor who uses the terminal 20.

The information processing apparatus 10 executes a process of storing the betting target bet on by the bettor who uses the terminal 20, a process of storing the magnitude of a value owned by the bettor, a process of determining a reward amount (i.e., a payout) according to a result of a competition, and the like.

In the betting system 1, in order to make it easier for a bettor who is a beginner bettor serving as the first user (first player) to understand how he/she should place a bet, the information processing apparatus 10 notifies the first user of information about a betting target of another user, who is the second user (second player). The information processing apparatus 10 notifies the first user of information about a second competition when the information processing apparatus 10 accepts a bet on the second competition from the second user after the first user placed his/her bet in a first competition on the same or at least partially the same betting target as a betting target bet on by the second user in the first competition. The information about the second competition includes at least one of (i) a player name who will participate in the second competition, (ii) the date and time when placing a bet is possible, and (iii) prediction contents of the second user.

As an example, a betting target is presented to the bettor by displaying a betting target designated by a tipster, who is someone that predicts a result of a competition and serves as the second user, on the terminal 20. The tipster is a sharp bettor who has significant experience in betting in the competitions or a bettor who has abundant knowledge of the contestants, for example, and is registered in the information processing apparatus 10 in advance. The tipster may be some bettors among a plurality of bettors, or may be a person who only makes predictions without placing any bet.

The bettor can watch one or more betting targets displayed on the terminal 20 and then bet on the same betting target as the displayed betting target, or at least partially on the same betting target. In this description, an act of betting on exactly the same or at least partially the same betting target predicted by the tipster is referred to as "bandwagon betting".

The information processing apparatus 10 accepts, from the bettor serving as the first user, a bandwagon bet based on a predetermined tipster serving as the second user in the first competition. When the information processing apparatus 10 accepts, from the tipster, a bet on the second competition different from the first competition, the information processing apparatus 10 notifies the bettor of the information on the second competition during a period in which a bet can be placed on the second competition and makes it easier for the bettor to continue placing bets on competitions. Next, configurations and operations of the information processing apparatus 10 and the terminal 20 will be described in detail.

### <Hardware configuration>

FIG. 2 shows an example of a hardware configuration of the information processing apparatus 10. The information processing apparatus 10 includes a processor 11, a storage part 12, a communications interface (IF) 13, an input device 14, and an output device 15.

The processor 11 is a central processing unit (CPU) or a graphical processing unit (GPU), and realizes various functions by executing a program stored in the storage part 12, for example.

The storage part 12 includes a storage medium such as a memory, a hard disk drive (HDD), or a solid state drive (SSD). The storage part 12 stores the program executed by the processor 11. The storage part 12 stores a competition table including information of each of a plurality of competitions.

The communications IF 13 includes a communication controller that communicates with the terminal 20 wirelessly or by wire, via the communication network N. The communications IF 13 provides notification of data received from the terminal 20 to the processor 11. The communications IF 13 transmits the data input from the processor 11 to the terminal 20.

The input device 14 accepts an input operation from an administrator of the information processing apparatus 10, for example. The input device 14 is a keyboard, a touch panel, a mouse, or a microphone, for example. The output device 15 outputs information to the administrator of the information processing apparatus 10, for example. The output device 15 is a display, a speaker, or the like, for example.

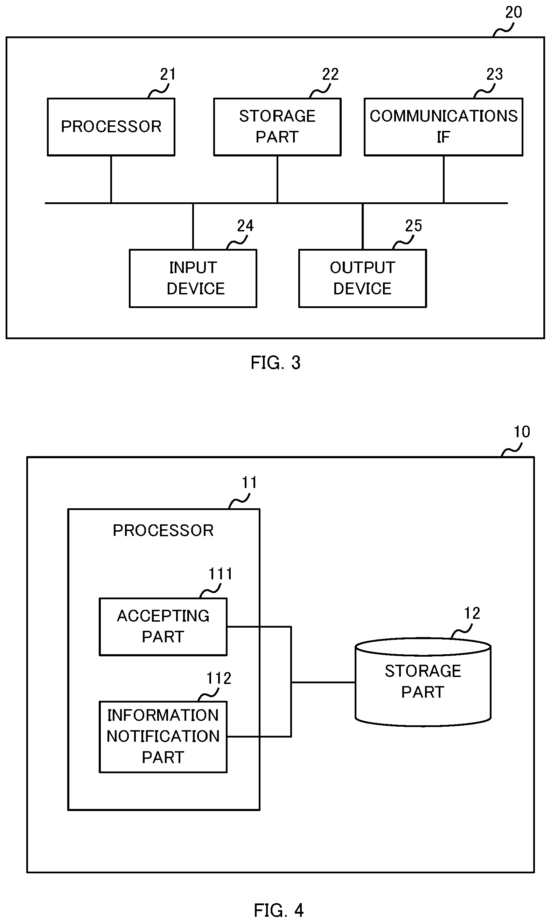

FIG. 3 shows an example of the hardware configuration of the terminal 20. The terminal 20 includes a processor 21, a storage part 22, a communications IF 23, an input device 24, and an output device 25.

The processor 21 is a CPU, for example, and realizes various functions by executing a program stored in the storage part 22.

The storage part 22 includes a storage medium such as a read only memory (ROM), a random access memory (RAM), or the like. The storage part 22 stores the program executed by the processor 21.

The communications IF 23 includes a communication controller that communicates with the information processing apparatus 10 wirelessly or by wire via the communication network N. The communications IF 23 provides notification of data received from the information processing apparatus 10 to the processor 21. The communications IF 23 transmits the data input from the processor 21 to the information processing apparatus 10.

The input device 24 accepts an input operation from the bettor, for example. The input device 24 is a keyboard, a touch panel, a mouse, or a microphone for example. The output device 25 outputs information to the bettor, for example. The output device 25 is a display or a speaker, for example.

### <Functional block configuration>

FIG. 4 shows a functional block configuration example of the processor 11. The processor 11 includes a accepting part 111, and an information notification part 112. The processor 11 functions as the accepting part 111 and the information notification part 112 by executing a program stored in the storage part 12.

The accepting part 111 accepts a bet from the bettor via an application program for betting which is run in the terminal 20 used by the bettor. Specifically, the accepting part 111 causes the bettor's terminal 20 in which the application program for betting runs to display a screen for accepting a bet on the first competition, and accepts the bettor's bet on the competition via the screen. The accepting part 111 accepts, from the bettor, a bandwagon bet which is a bet placed on the first competition based on betting contents for the first competition of a tipster who is different from the bettor.

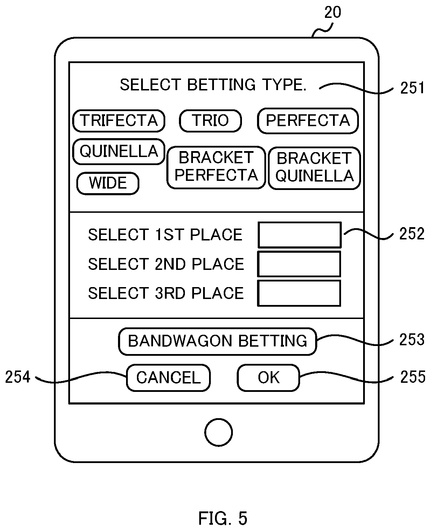

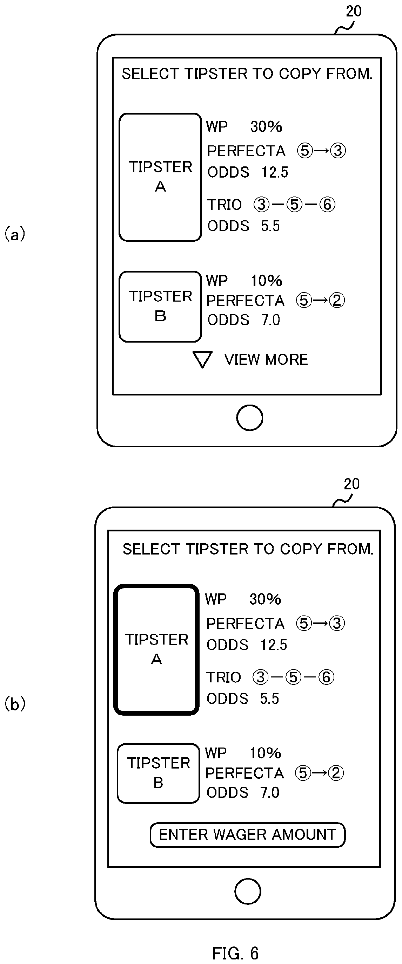

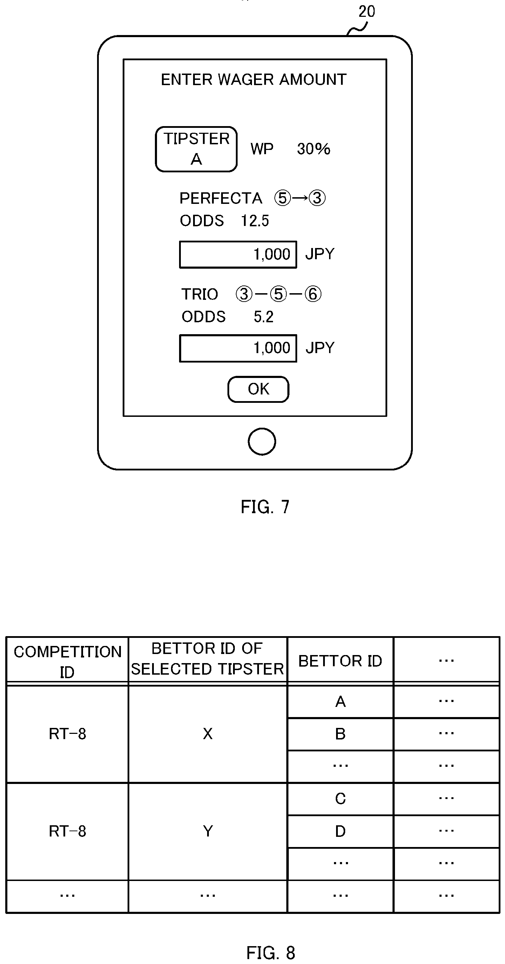

FIGS. 5 to 7 each show an example of a screen to be displayed on the terminal 20 by the accepting part 111. FIG. 5 is a screen to be displayed on the terminal 20 on which the application program for betting is launched. FIGS. 6A and 6B are each an example of a screen to be displayed on the terminal 20 when the bettor selects to place a bandwagon bet. FIG. 7 is a screen for entering a wager amount of a bandwagon bet.

The screen shown in FIG. 5 shows an area 251 for selecting a betting type, an area 252 for entering a predicted betting target, an operation image 253 for selecting bandwagon betting, an operation image 254 for a cancelation operation, and an operation image 255 for a confirmation operation. When the bettor wishes to decide on a betting target by himself/herself, the bettor may place a bet by selecting a betting type in the area 251, entering the contestant number or the starting gate number in the area 252, and selecting an "OK" button of the operation image 255.

The bettor who wishes to place a bandwagon bet can place the bandwagon bet by selecting a "bandwagon betting" button of the operation image 253 and then selecting the "OK" button of the operation image 255, without operating the areas 251 and 252. When the "bandwagon bet" button is selected, the accepting part 111 displays, on the terminal 20, a plurality of tipsters for the bettor to place his/her bandwagon bet, as shown in FIG. 6A.

In FIG. 6A, one or more predicted betting targets and odds corresponding to the predicted betting targets are displayed in association with a tipster name. The bettor selects a tipster to place his/her bandwagon bet for on the screen shown in FIG. 6A displayed on the terminal 20. When the bettor selects one or more tipsters on the screen shown in FIG. 6A, the screen transitions to a screen shown in FIG. 6B. When the bettor touches the "Enter wager amount" button on the screen shown in FIG. 6B, the screen transitions to a screen shown in FIG. 7.

A wager-amount entry field for each of one or more betting targets that are designated by the tipster selected by the bettor is displayed on a screen shown in FIG. 7. On the screen shown in FIG. 7, the bettor enters the wager amount for at least any one of the one or more betting targets designated by the selected tipster. When the bettor enters the wager amount and then touches the "OK" button, the terminal 20 transmits (i) a competition ID identifying the competition to be bet on, (ii) a bettor ID of the bettor, (iii) a tipster ID of the tipster selected by the bettor from among a plurality of tipsters, (iv) a betting instruction for a betting target that is at least partially the same as the betting target designated by the selected tipster (that is, a bandwagon-betting instruction for placing a bandwagon bet based on the selected tipster), and (v) the wager amount, to the information processing apparatus 10.

By receiving, from the terminal 20 of the bettor, (i) the competition ID, (ii) the bettor ID of the bettor, (iii) a betting instruction for placing a bet on the betting target in the competition, and (iv) the wager amount, the accepting part 111 accepts the bettor's bet on the competition corresponding to the competition ID. Further, by receiving, from the terminal 20 of the bettor, (i) the competition ID, (ii) the bettor ID of the bettor, (iii) the bettor ID of the selected tipster, (iv) the bandwagon-betting instruction, and (v) the wager amount, the accepting part 111 accepts, from the bettor, his/her bandwagon bet on the competition based on betting contents of the tipster for the competition.

Upon accepting a bandwagon bet, the accepting part 111 associates (i) the competition ID, (ii) the bettor ID, and (iii) the bettor ID of the selected tipster with each other, and stores them in the storage part 12 as the bandwagon betting history information. FIG. 8 shows an example of the bandwagon betting history information. As shown in FIG. 8, it can be confirmed that the competition ID, the bettor ID of the selected tipster, and the bettor ID of the bettor are associated with each other in the bandwagon betting history information. The accepting part 111 executes a bet of the bettor for the competition when it accepts the bet.

The information notification part 112 notifies the bettor of various types of information. The information notification part 112 notifies the first user, who is the bettor, of the information about the second competition when a bet on the second competition is accepted from the second user, who is another bettor, after the first user placed his/her bet in the first competition on the same or at least partially the same betting target as the betting target bet by the second user on the first competition, for example.

When a bet on the second competition different from the first competition is accepted from the tipster, who is the second user, the information notification part 112 notifies the bettor, who is the first user and has placed the bandwagon bet based on the tipster's bet on the first competition, of the information on the second competition during the period in which a bet can be placed on the second competition, for example. The information on the second competition is a racecourse, a race grade, a type of race, and contestants of the competition, for example. The information notification part 112 notifies the bettor of the information on the second competition when a bet on the second competition different from the first competition is accepted from the tipster after the bettor, serving as the first user, has placed his/her bet in the first competition on the same or at least partially the same betting target as a betting target predicted for the first competition by the tipster, serving as the second user, on the first competition.

Specifically, when the bet on the second competition that takes place after the first competition is accepted from the tipster, the information notification part 112 references the bandwagon betting history information stored in the storage part 12 and identifies the bettor ID of the bettor who placed his/her bandwagon bet based on the tipster's bet on the first competition. If the bettor corresponding to the identified bettor ID has not bet on the second competition, the information notification part 112 notifies the terminal 20 of the bettor about the information on the second competition. In this way, the information processing apparatus 10 can encourage the bettor who has not bet on the second competition to place a bet on the second competition.

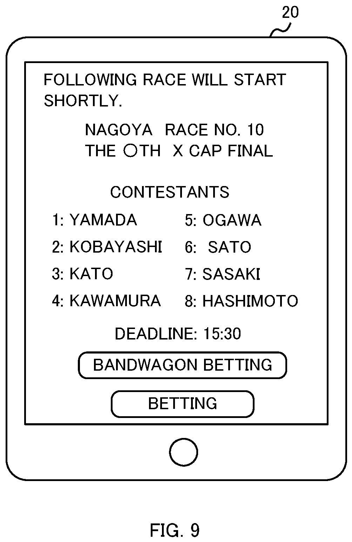

By transmitting, to the terminal 20 used by the bettor, a notification screen which can be transitioned to a betting screen for the second competition and includes the information on the second competition, the information notification part 112 notifies the bettor of the information on the second competition. FIG. 9 shows an example of the notification screen displayed on the terminal. In the notification screen shown in FIG. 9, it can be confirmed that a racecourse, a race grade, a race name, a type of race, and contestants are displayed as the information on the second competition. In addition, in the notification screen shown in FIG. 9, it can be confirmed that (i) a deadline for placing a bet, (ii) a bandwagon betting acceptance button displayed as "bandwagon betting," and (iii) a betting acceptance button displayed as "betting" are displayed.

When the betting acceptance button is pressed on the notification screen, the betting acceptance screen shown in FIG. 5 is displayed on the terminal 20, and the bettor can place his/her bet on the second competition. When the bandwagon betting button is pressed on the notification screen, the betting acceptance screen for the bandwagon betting shown in FIG. 7 is displayed on the terminal 20, and the bettor can place his/her bandwagon bet on the second competition. The accepting part 111 may display, on the terminal 20, the screen shown in FIG. 7 in a state where the minimum amount of a wager amount is input in a wager-amount entry field for the bandwagon betting shown in FIG. 7.

The information notification part 112 may display, on the betting screen for the second competition, information on the betting contents bet on the second competition by the tipster when a predetermined condition is satisfied. Specifically, the information notification part 112 may notify the bettor of the information on the second competition by a first predetermined time before a deadline for placing a bet on the second competition. Further, when the bettor accesses the notification screen or the betting screen for the second competition after a second predetermined time which is before the deadline for placing the bet on the second competition and after the first predetermined time, the information notification part 112 may display, on the betting screen for the second competition, the information on the betting contents bet on the second competition by the tipster. Since the information notification part 112 operates in this manner, the bettor can quickly place a bandwagon bet while confirming the betting contents of the tipster when the deadline for placing a bet is approaching at a time after the first predetermined time.

Further, when the bettor accesses the notification screen or the betting screen for the second competition before the second predetermined time, the information notification part 112 may allow the bettor to freely select betting contents without displaying the information on the betting contents bet on the second competition by the second user on the betting screen for the second competition. By doing this, the information processing apparatus 10 can improve the bettor's betting skill because the bettor can consider how to place a bet by himself/herself when there is time until the deadline for placing a bet. In this case, the information notification part 112 may display, on the betting screen for the second competition, the information on the betting contents bet on the second competition by the tipster in response to the current time becoming later than the second predetermined time.

In addition, when bets on a plurality of second competitions held in the same time slot are accepted from one or more tipsters, the information notification part 112 notifies the bettor, who has selected the one or more tipsters and placed his/her bandwagon bets based on the selected one or more tipsters, about information on a second competition selected from among the plurality of second competitions according to a priority level. Here, the priority level is determined on the basis of the number of bettors who have placed bandwagon bets on the second competition in the past, for example. For example, the larger the number of bettors who have placed the bandwagon bets on the second competition in the past, the higher the priority level of the second competition is set. Further, the priority level may be determined on the basis of the number of bettors whose bets were wins in the past among a plurality of bettors who have placed bandwagon bets in the second competition in the past, and payouts and odds at that time when their bets were wins. In this way, the information processing apparatus 10 can preferentially notify information on the second competition on which the bettors who have significant experience are placing their bets.

Further, when bets placed on the plurality of second competitions held in the same time slot are accepted from one or more tipsters, the information notification part 112 may notify the bettor of information on a second competition which is selected from among the plurality of second competitions on the basis of its degree of association with the first competition. The degree of association between the second competition and the first competition is determined on the basis of the commonality between the information on the second competition and information on the first competition. For example, the degree of association between the second competition and the first competition is determined on the basis of at least one of (i) whether a grade of the first competition and a grade of the second competition are the same, (ii) whether a competition field in which the first competition is held and a competition field in which the second competition is held are the same, and (iii) a matching degree between a betting target in the first competition and a betting target in the second competition. In this way, the information processing apparatus 10 can notify the bettor of the information on the second competition that is highly related to the first competition and easier for the bettor to bet on.

When the screen of the application program for betting is not displayed on the terminal 20 of the bettor, the information notification part 112 may display the information on the second competition on the terminal 20. For example, the information notification part 112 acquires, from the terminal 20, state information indicating whether or not the screen of the application program for betting is displayed on the terminal 20 for every predetermined time period. When the acquired state information indicates that the screen of the application program for betting is not displayed on the terminal 20, the information notification part 112 causes the terminal 20 to display the information on the second competition. For example, the information notification part 112 notifies the terminal 20 of the information on the second competition using push notifications and causes the terminal 20 to display a screen including the information on the second competition in a state where the screen of the application program for betting is not displayed on the terminal 20 of the bettor.

By doing this, when the application program for betting is not displayed on the terminal 20 and so the bettor is not aware that the second competition is to be held, the information processing apparatus 10 can notify the bettor of the information on the second competition and make the bettor notice that the second competition will be held.

In addition, when the bettor does not bet on the second competition after the information on the second competition has been notified to the bettor, the information notification part 112 does not need to notify the bettor of information on a third competition even though the accepting part 111 has accepted, from the tipster, a bet on the third competition different from the first competition and the second competition. This makes it possible to stop the notification of the information on the third competition to the bettor who has not continuously placed bandwagon bets so that the bettor does not feel that it is bothersome to be notified of information on competitions.

Note that when the bettor does not bet on the second competition, the information notification part 112 does not notify the bettor of the information on the third competition even though the accepting part 111 has accepted the bet on the third competition from the tipster, but it is not limited to this. When the accepting part 111 accepts the bet on the third competition from the tipster in a case where the bettor has not bet on the second competition, the information notification part 112 may determine whether or not to notify the bettor of the information on the third competition on the basis of the matching degree between the information on the second competition and the information on the third competition.

For example, the information notification part 112 may notify the information on the third competition when (i) the matching degree between the contestants or grades of the second competition and the contestants or grades of the third competition is low and (ii) the degree of association between the second competition and the third competition is low. In this case, the information notification part 112 may determine whether or not to notify the information on the third competition further on the basis of (i) the matching degree between the information on the first competition and the information on the third competition. In this way, the information processing apparatus 10 can notify the bettor of the information on the third competition that is less related to the second competition and yet is left with a possibility to be bet on by the bettor.

### <Processing flow of the information processing apparatus 10>

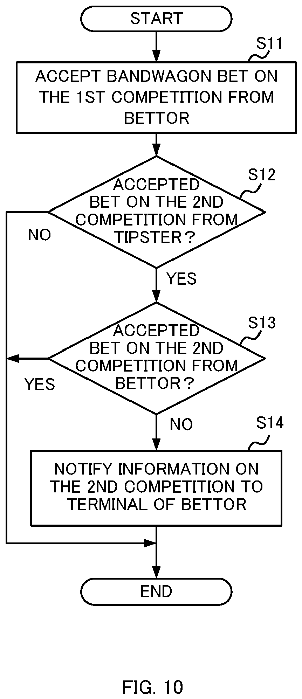

FIG. 10 is a flowchart showing processing of the information processing apparatus 10. First, the accepting part 111 accepts, from a bettor, a bandwagon bet which is a bet on the first competition based on betting contents of the tipster for the first competition (S11).

Next, the information notification part 112 determines whether or not it has accepted a bet on the second competition that takes place after the first competition from a tipster based on whom the bettor placed his/her bandwagon bet (S12). Upon determining that the bet on the second competition was accepted, the information notification part 112 shifts the process to S13, and upon determining that the bet on the second competition was not accepted, the information notification part 112 ends the processes relevant to this flowchart.

In S13, the information notification part 112 determines whether or not it has accepted a bet on the second competition from the bettor who placed his/her bandwagon bet based on the tipster in S11. Upon determining that it has accepted the bet on the second competition from the bettor, the information notification part 112 ends the processes relevant to this flowchart, and upon determining that it has not accepted the bet on the second competition from the bettor, the information notification part 112 shifts the process to S14. In S14, the information notification part 112 notifies the terminal 20 of the bettor about the information on the second competition, during the period in which a bet can be placed on the second competition.

### <Variation example>

In the above description, the case where the second user is the tipster based on whom the first user placed his/her bandwagon bet was illustrated as an example, but the second user is not limited to the tipster. When a bet on the second competition different from the first competition is accepted from the second user who has bet on the same betting target as the first user in the first competition, the information notification part 112 may notify the first user of the information on the second competition. For example, the information notification part 112 may treat, as the second user, another user who has bet on the same betting target as the first user whose bet placed on the first competition was a win, and notify the first user of the information on the second competition when the second user has placed a bet on the second competition.

In this case, the information notification part 112 may notify the first user of the information on the second competition together with at least one of (i) information that the second user who bet on the same betting target in the first competition has placed a bet on the second competition and (ii) information for identifying the second user. Since the information notification part 112 notifies such information, the first user is motivated to bet also on the second competition.

Further, the second user may be (i) pre-registered other users who belong to the same group as the first user, (ii) other users who placed their bets on the same competition as the first user, or (iii) other users who have viewed the same competition introduction information (i.e., a streaming video including information that introduces prediction contents of a competition) as the first user. The competition introduction information is information indicating contents of betting that one or more tipsters intend to place on the first competition, and includes at least one of a tipster ID for identifying the tipster, the betting type, the betting target, and the predetermined value to be bet, for example. The competition introduction information may include information about a tipster, such as his/her profile, face image, and the like of the tipster who predicts outcomes of competitions. Having the information notification part 112 notify the first user of the information about the second competition when such a second user places a bet on the second competition also improves the probability of the first user placing a bet on the second competition.

When the competition introduction information includes a plurality of contents of betting that tipsters intend to place on the first competition, and the user can select one tipster from the plurality of tipsters, and the information notification part 112 may set, as the second user, a user who selected the same tipster as the first user and viewed the information indicating contents of betting that said tipster intends to place on the first competition. In addition, when the first user placed his/her bandwagon bet on a certain tipster after viewing the information indicating contents of betting that said tipster placed on the first competition, the information notification part 112 may set a user who placed a bandwagon bet on the tipster on whom the first user placed the bandwagon bet as the second user.

### <Effect of the betting system 1>

As described above, the accepting part 111 accepts the bettor's bet on the first competition. When the bet on the second competition different from the first competition is accepted from the second user, the information notification part 112 notifies the first user of the information on the second competition. Since the accepting part 111 and the information notification part 112 operate in this manner, the bettor can place a bet on the second competition while referencing the information on the second competition when the bettor does not know what kind of competitions to bet on because the bettor's favorite players or racehorses have not been decided or he/she does not have much knowledge about the competition. Therefore, the information processing apparatus 10 can make it easier for the bettor to place bets on competitions continuously.

The present disclosure is explained on the basis of the exemplary embodiments. The technical scope of the present disclosure is not limited to the scope explained in the above embodiments and it is possible to make various changes and modifications within the scope of the invention. For example, all or part of the apparatus can be configured with any unit which is functionally or physically dispersed or integrated. Further, new exemplary embodiments generated by arbitrary combinations of them are included in the exemplary embodiments. Further, effects of the new exemplary embodiments brought by the combinations also have the effects of the original exemplary embodiments.

In addition to the above-described embodiments, the followings configurations are additionally described.

### (Appendix 1)

An information processing apparatus includes: an accepting part that accepts a bet on the first competition from the first user and a bet on the first competition from the second user; and an information notification part that notifies the first user of information on a second competition different from the first competition when the accepting part accepts a bet on the second competition from the second user after the first user has bet in the first competition on the same or at least partially the same betting target as a betting target bet on by the second user in the first competition. Since the information processing apparatus is configured in this manner, it makes it easier for a user (bettor) to continue placing bets on competitions.

### (Appendix 2)

The information processing apparatus according to Appendix 1, wherein the information notification part notifies the first user of the information on the second competition during a period in which a bet can be placed on the second competition. Since the information processing apparatus is configured in this manner, the user (bettor) can continuously place bets on other competitions.

### (Appendix 3)

The information processing apparatus according to Appendix 1 or 2, wherein the information notification part notifies the first user of the information on the second competition if the first user does not bet on the second competition. Since the information processing apparatus is configured in this manner, it is possible to encourage the bettor to place a bet on the second competition.

### (Appendix 4)

The information processing apparatus according to any one of Appendixes 1 to 3, wherein the information notification part notifies the first user of information on a second competition selected from among a plurality of second competitions according to a priority level when bets on the plurality of the second competitions are accepted from the second user. Since the information processing apparatus is configured in this manner, it is possible to notify competition information with a high priority level and a high possibility of being bet on by the bettor.

### (Appendix 5)

The information processing apparatus according to any one of Appendixes 1 to 4, wherein when bets on the plurality of second competitions are accepted from the second user, the information notification part notifies the first user of information on the second competition selected from the plurality of second competitions based on the degree of association with the first competition. Since the information processing apparatus is configured in this manner, it is possible to recommend to the bettor information on the second competition that is highly related to the first competition and is easy for the user to place a bet on.

### (Appendix 6)

The information processing apparatus according to any one of Appendixes 1 to 5, wherein the accepting part accepts the bet via an application program for betting which is run in a first-user terminal used by the first user, and the information notification part causes the first-user terminal to display the information on the second competition when a screen for the application program for betting is not displayed on the first-user terminal. Since the information processing apparatus is configured in this manner, it is possible to make a bettor aware that the second competition will be held when it is likely that the bettor is not aware that the second competition will take place.

### (Appendix 7)

The information processing apparatus according to any one of Appendixes 1 to 6, wherein the information notification part does not notify the first user of information on a third competition even though the accepting part has accepted, from the second user, a bet on the third competition different from the first competition and the second competition, if the first user does not bet on the second competition after the information on the second competition has been notified to the first user. Since the information processing apparatus is configured in this manner, it is possible to stop the notification of the information to the first user to whom notification is not so effective.

### (Appendix 8)

The information processing apparatus according to any one of Appendixes 1 to 7, wherein the information notification part notifies the first user of the information on the second competition by transmitting, to a first-user terminal used by the first user, a notification screen which can be transitioned to a betting screen for the second competition and includes the information on the second competition. Since the information processing apparatus is configured in this manner, it is possible to increase the possibility of the bettor placing bets by transitioning from the notification screen to the betting screen.

### (Appendix 9)

The information processing apparatus according to Appendix 8, wherein the information notification part displays, on the betting screen for the second competition, information on betting contents bet in the second competition by the second user when a predetermined condition is satisfied. Since the information processing apparatus is configured in this manner, the bettor can understand the betting contents bet on by the tipster.

### (Appendix 10)

The information processing apparatus according to Appendix 9, wherein the information notification part notifies the first user of the information on the second competition by a first predetermined time before a deadline for placing a bet on the second competition, displays, on the betting screen for the second competition, the information on the betting contents bet in the second competition by the second user when the first user accesses the notification screen or the betting screen for the second competition after a second predetermined time which is before the deadline for placing the bet on the second competition and after the first predetermined time, and does not display, on the betting screen for the second competition, the information on the betting contents bet in the second competition by the second user when the first user accesses the notification screen or the betting screen for the second competition before the second predetermined time. Since the information processing apparatus is configured in this manner, the betting contents bet on by the second user (tipster) for the second competition are displayed on the betting screen for the second competition when the deadline for placing the bet on the second competition approaches, and therefore the bettor can be encouraged to place a bet if he/she is not sure about betting.

### (Appendix 11)

The information processing apparatus according to any one of Appendixes 1 to 10, wherein the accepting part accepts, from the first user, a bet on the first competition based on betting contents of the second user for the first competition, and the information notification part notifies the first user of the information on the second competition when the accepting part accepts a bet on the second competition, from the second user after accepting, from the first user, the bet on the first competition based on the betting contents of the second user for the first competition. Since the information processing apparatus is configured in this manner, the probability of the first user placing a bet on the second competition can be increased.

### (Appendix 12)

The information processing apparatus according to any one of Appendixes 1 to 11, wherein the second user is a tipster who predicts a winner of the first competition, and the information notification part notifies the first user of the information on the second competition when a bet on the second competition different from the first competition is accepted from the second user after the first user has bet in the first competition on the same or at least partially the same betting target as a betting target predicted by the second user. Since the information processing apparatus is configured in this manner, the first user can easily place bandwagon bets continuously in accordance with the tipster based on whom he/she has placed the bandwagon bet in the first competition.

### (Appendix 13)

The information processing apparatus according to any one of Appendixes 1 to 12, wherein the information notification part notifies the first user of the information on the second competition when the accepting part accepts a bet on the second competition from the second user who has bet on the same betting target as the first user whose bet placed in the first competition was a win. Since the information processing apparatus is configured in this manner, the first user who won the betting in the first competition is motivated to place a bet on the second competition.

### (Appendix 14)

The information processing apparatus according to any one of Appendixes 1 to 13, wherein the information notification part notifies the first user of the information on the second competition together with at least one of (i) information that the second user who bet on the same betting target in the first competition has bet in the second competition and (ii) information for identifying the second user. Since the information processing apparatus is configured in this manner, the first user can know about the second user, so that the first user is motivated to bet on the second competition in the same manner as the second user.

### (Appendix 15)

The information processing apparatus according to any one of Appendixes 1 to 14, wherein the second user is other users who have viewed the same competition introduction information as the first user. Since the information processing apparatus is configured in this manner, the first user who is likely to bet on the second competition in the same manner as the second user is motivated to bet on the second competition.

### (Appendix 16)

The information processing apparatus according to any one of Appendixes 1 to 15, wherein the second user is at least one of (i) pre-registered other users who belong to the same group as the first user and (ii) other users who bet on the same competition as the first user. Since the information processing apparatus is configured in this manner, the first user who is likely to bet on the second competition in the same manner as the second user is motivated to bet on the second competition.

### (Appendix 17)

An information processing method comprising computer-implemented steps of: accepting a bet on the first competition from a first user and a bet on the first competition from a second user; and notifying the first user of information on a second competition different from the first competition when a bet on the second competition is accepted from the second user after the first user has bet in the first competition on the same or at least partially the same betting target as a betting target bet on by the second user in the first competition. By executing such an information processing method, the user (bettor) can easily continue betting on competitions.

### (Appendix 18)

A program that causes a computer to function as: an accepting part that accepts a bet on the first competition from a first user and a bet on the first competition from a second user; and an information notification part that notifies the first user of information on a second competition different from the first competition when the accepting part accepts a bet on the second competition from the second user after the first user has bet in the first competition on the same or at least partially the same betting target as a betting target bet on by the second user in the first competition. By executing such an information processing method, the user (bettor) can easily continue betting on competitions.

### (Appendix 19)

An information processing apparatus includes: an accepting part that accepts, from a first user, a bet placed on a first competition based on betting contents of a second user, who is different from the first user, for the first competition; and an information notification part that notifies the first user of information on the second competition when a bet on a second competition different from the first competition is accepted from the second user. By executing such an information processing method, the user (bettor) can easily continue betting on competitions.

### (Appendix 20)

An information processing method comprising computer-implemented steps of: accepting, from a first user, a bet placed on a first competition based on betting contents of a second user, who is different from the first user, for the first competition; and notifying the first user of information on the second competition when a bet on a second competition different from the first competition is accepted from the second user. By executing such an information processing method, the user (bettor) can easily continue betting on competitions.

### (Appendix 21)

A program that causes a computer to function as: an accepting part that accepts, from a first user, a bet placed on a first competition based on betting contents of a second user, who is different from the first user, for the first competition; and an information notification part that notifies the first user of information on the second competition when a bet on a second competition different from the first competition is accepted from the second user. By executing such a program with the processor, the user (bettor) can easily continue betting on competitions.

### [Description of the reference numerals]]

- 1: Betting system
- 10: Information processing apparatus
- 11: Processor
- 12: Storage part
- 13: Communications IF
- 14: Input device
- 15: Output device
- 20: Terminal
- 21: Processor
- 22: Storage part
- 23: Communication IF
- 24: Input device
- 25: Output device
- 111: Accepting part
- 112: Information notification part

## Claims

1. An information processing apparatus, comprising:
an accepting part that accepts a bet on a first competition from a first user and a bet on the first competition from a second user; and
an information notification part that notifies the first user of information on a second competition different from the first competition when the accepting part accepts a bet on the second competition from the second user after the first user has bet in the first competition on the same or at least partially the same betting target as a betting target bet on by the second user in the first competition.

2. The information processing apparatus according to claim 1, wherein the information notification part notifies the first user of the information on the second competition during a period in which a bet can be placed on the second competition.

3. The information processing apparatus according to claim 1 or 2, wherein the information notification part notifies the first user of the information on the second competition if the first user has not bet on the second competition.

4. The information processing apparatus according to any one of claims 1 to 3, wherein the information notification part notifies the first user of information on a second competition selected from among a plurality of second competitions according to a priority level when bets on the plurality of the second competitions are accepted from the second user.

5. The information processing apparatus according to any one of claims 1 to 4, wherein the information notification part notifies the first user of information on a second competition selected from among a plurality of second competitions on the basis of the degree of association with the first competition when bets on the plurality of the second competitions are accepted from the second user.

6. The information processing apparatus according to any one of claims 1 to 5, wherein the accepting part accepts the bet via an application program for betting which is run in a first-user terminal used by the first user, and
the information notification part causes the first-user terminal to display the information on the second competition when a screen for the application program for betting is not displayed on the first-user terminal.

7. The information processing apparatus according to any one of claims 1 to 6, wherein the information notification part does not notify the first user of information on a third competition even though the accepting part has accepted, from the second user, a bet on the third competition different from the first competition and the second competition, if the first user does not bet on the second competition after the information on the second competition has been notified to the first user.

8. The information processing apparatus according to any one of claims 1 to 7, wherein the information notification part notifies the first user of the information on the second competition by transmitting, to a first-user terminal used by the first user, a notification screen which can be transitioned to a betting screen for the second competition and includes the information on the second competition.

9. The information processing apparatus according to claim 8, wherein the information notification part displays, on the betting screen for the second competition, information on betting contents bet in the second competition by the second user when a predetermined condition is satisfied.

10. The information processing apparatus according to claim 9, wherein the information notification part: notifies the first user of the information on the second competition by a first predetermined time before a deadline for placing a bet on the second competition, displays, on the betting screen for the second competition, the information on the betting contents bet in the second competition by the second user when the first user accesses the notification screen or the betting screen for the second competition after a second predetermined time which is before the deadline for placing the bet on the second competition and after the first predetermined time, and does not display, on the betting screen for the second competition, the information on the betting contents bet in the second competition by the second user when the first user accesses the notification screen or the betting screen for the second competition before the second predetermined time.

11. The information processing apparatus according to any one of claims 1 to 10, wherein the accepting part accepts, from the first user, a bet on the first competition based on betting contents of the second user for the first competition, and the information notification part notifies the first user of the information on the second competition when the accepting part accepts a bet on the second competition, from the second user after accepting, from the first user, the bet on the first competition based on the betting contents of the second user for the first competition.

12. The information processing apparatus according to any one of claims 1 to 11, wherein the second user is a tipster who predicts a winner of the first competition, and the information notification part notifies the first user of the information on the second competition when a bet on the second competition different from the first competition is accepted from the second user after the first user has bet in the first competition on the same or at least partially the same betting target as a betting target predicted by the second user.

13. The information processing apparatus according to any one of claims 1 to 12, wherein the information notification part notifies the first user of the information on the second competition when the accepting part accepts a bet on the second competition from the second user who has bet on the same betting target as the first user whose bet placed in the first competition was a win.

14. The information processing apparatus according to any one of claims 1 to 13, wherein the information notification part notifies the first user of the information on the second competition together with at least one of (i) information that the second user who bet on the same betting target in the first competition has bet in the second competition or (ii) information for identifying the second user.

15. The information processing apparatus according to any one of claims 1 to 14, wherein the second user is other users who have viewed the same competition introduction information as the first user.

16. The information processing apparatus according to any one of claims 1 to 15, wherein the second user is at least one of (i) pre-registered other users who belong to the same group as the first user or (ii) other users who bet on the same competition as the first user.

17. An information processing method comprising computer-implemented steps of:
accepting a bet on the first competition from a first user and a bet on the first competition from a second user; and
notifying the first user of information on a second competition different from the first competition when a bet on the second competition is accepted from the second user after the first user has bet in the first competition on the same or at least partially the same betting target as a betting target bet on by the second user in the first competition.

18. A program that causes a computer to function as
an accepting part that accepts a bet on the first competition from a first user and a bet on the first competition from a second user; and
an information notification part that notifies the first user of information on a second competition different from the first competition when the accepting part accepts a bet on the second competition from the second user after the first user has bet in the first competition on the same or at least partially the same betting target as a betting target bet on by the second user in the first competition.

19. An information processing apparatus comprising:
an accepting part that accepts, from a first user, a bet placed on a first competition based on betting contents of a second user, who is different from the first user, for the first competition; and
an information notification part that notifies the first user of information on the second competition when a bet on a second competition different from the first competition is accepted from the second user.

20. An information processing method comprising computer-implemented steps of:
accepting, from a first user, a bet placed on a first competition based on betting contents of a second user, who is different from the first user, for the first competition; and
notifying the first user of information on the second competition when a bet on a second competition different from the first competition is accepted from the second user.

21. A program that causes a computer to function as:
an accepting part that accepts, from a first user, a bet placed on a first competition based on betting contents of a second user, who is different from the first user, for the first competition; and
an information notification part that notifies the first user of information on the second competition when a bet on a second competition different from the first competition is accepted from the second user.
